Europäisches Patentamt

European Patent Office

Office européen des brevets

(19)

(11) Veröffentlichungsnummer: **0 132 525**
**B1**

(12) # EUROPÄISCHE PATENTSCHRIFT

(45) Veröffentlichungstag der Patentschrift:
15.10.86

(51) Int. Cl.⁴: **B 29 C 47/04, B 29 B 7/00**

(21) Anmeldenummer: 84105390.3

(22) Anmeldetag: 12.05.84

(54) **Bearbeitungswelle für Maschinen zum Extrudieren, Kneten, Dispergieren, Mischen oder Homogenisieren von insbesondere plastischen Materialien.**

(30) Priorität: 14.06.83 DE 3321383

(43) Veröffentlichungstag der Anmeldung:
13.02.85 Patentblatt 85/7

(45) Bekanntmachung des Hinweises auf die Patenterteilung:
15.10.86 Patentblatt 86/42

(84) Benannte Vertragsstaaten:
AT BE CH FR GB IT LI NL

(56) Entgegenhaltungen:
DD-A-124 023
DE-B-1 198 051
GB-A-1 483 302

(73) Patentinhaber: Blach, Josef A., Wilhelmstrasse 24,
D-7144 Asperg (DE)

(72) Erfinder: Blach, Josef A., Wilhelmstrasse 24,
D-7144 Asperg (DE)
Erfinder: Stade, Kurt, D-8754 Grossostheim (DE)

(74) Vertreter: Hoeger, Stellrecht & Partner,
Uhlandstrasse 14c, D-7000 Stuttgart 1 (DE)

EP 0 132 525 B1

## Beschreibung

Die Erfindung betrifft eine Bearbeitungswelle für Maschinen zum Extrudieren, Kneten, Dispergieren, Mischen oder Homogenisieren zähviskoser, plastischer, körniger oder pulverförmiger Materialien, und zwar eine Bearbeitungswelle mit einer wenigstens eine Längsnut aufweisenden Trag- oder Kernwelle, auf die büchsen- oder ringscheibenförmige Bearbeitungselemente aufgeschoben sind, welche zur Drehsicherung auf der Kernwelle mit einem Vorsprung in die Kernwellen-Längsnut eingreifen, sowie mit einem am vorderen Ende der Kernwelle befestigten axialen Sicherungselement für die Bearbeitungselemente, mindestens einer die Bearbeitungselemente in axialer Richtung nach hinten abstützenden, auf die Kernwelle aufgeschobenen Distanzhülse die an ihrem Aussenumfang eine Dichtfläche für eine Stopfbüchse oder dergleichen aufweist, einer auf den hinteren Endbereich der Kernwelle aufgeschobenen Kupplungshülse, mit der sich die Bearbeitungswelle an eine Antreibswelle anschliessen lässt und welche zur Drehmomentübertragung mit einem Vorsprung in die Kernwellen-Längsnut eingreift und ein Aussengewinde aufweist, auf das eine die Kupplungshülse übergreifende Spannmutter mit einem Innengewinde aufgeschraubt ist, und mit einem Spannkraft-Übertragungselement, welches durch die Spannmutter nach hinten gegen einen Anschlag der Kernwelle angezogen werden kann.

Insbesondere bei Schneckenwellen-Extrudern, aber auch bei anderen Kunststoffmaschinen der vorstehend erwähnten Art müssen die in Rede stehenden Bearbeitungswellen zum Austauschen der Bearbeitungselemente oder zum Reinigen ab und zu ausgebaut werden, was nur bei warmer Maschine (200—300°C) möglich ist, um ein Erstarren des noch in der Maschine befindlichen Kunststoffs zu vermeiden. Die Bearbeitungswellen müssten dann eigentlich im warmen Zustand wieder eingebaut werden, um die erforderliche Dichtflächenpressung zwischen den verschiedenen, auf die Kernwelle aufgeschobenen Elementen z.B. durch Anziehen des erwähnten axialen Sicherungselements ausserhalb der Maschine zu erzeugen und zu verhindern, daß diese Dichtflächenpressung beim Betrieb der Maschine durch Wärmeausdehnung der Kernwelle verwindert wird oder gar ganz verschwindet—tritt dies ein, dringt Kunststoff unter den in der Maschine wirkenden hohen Drücken zwischen die verschiedenen, auf die Kernwelle aufgeschobenen Elemente ein und verkokt dort, da kein Materialaustausch mehr erfolgt; die Folge ist, daß sich die verschiedenen, auf die Kernwelle aufgeschobenen Elemente später nicht mehr abnehmen lassen. Bei den bisher bekanntgewordenen Bearbeitungswellen der in Rede stehenden Art lässt sich aber die Dichtflächenpressung zwischen den Stirnflächen der verschiedenen, auf die Kernwelle aufgeschobenen Elemente wie Bearbeitungselemente und Distanzhülse bei in die Maschine eingebauter Bearbeitungswelle nicht mehr erhöhen, da das für die Erzeugung der Dichtflächenpressung verantwortliche Spannelement nicht mehr zugänglich ist.

Bei einer bekannten Bearbeitungswelle der eingangs erwähnten Art besitzt die Kernwelle eine sich über ihre ganze Länge erstreckende Keilverzahnung und an ihrem vorderen Ende eine axiale Gewindebohrung, in die das Sicherungselement mit einem Gewindeschaft eingeschraubt werden kann. Dieses Sicherungselement steht in radialer Richtung über die Kernwelle über und bildet so einen axialen Anschlag für die auf der Kernwelle aufgeschobenen, als Schneckenbüchsen ausgebildeten Bearbeitungselemente, deren Innenumfang der Keilverzahnung der Kernwelle entsprechend profiliert ist. Letzteres gilt auch für die Distanzhülse, die zwischen den Schneckenbüchsen und einem geteilten Anschlagring liegt, der in eine Umfangsnut der Kernwelle eingreift, welche deren Keilverzahnung unterbricht. Die Kupplungshülse besitzt an ihrem Innenumfang gleichfalls ein Keilverzahnung, mit der sie einerseits auf das hintere Ende der Kernwelle und andererseits auf das vordere Ende einer Antriebswelle aufgeschoben werden kann, um das Antriebsdrehmoment auf die Kernwelle zu übertragen. Im Bereich ihres vorderen Endes besitzt die Kupplungshülse ferner ein Aussengewinde, auf das die als Überwurfmutter ausgebildete Spannmutter aufgeschraubt werden kann. Die letztere weist eine derart abgestufte Bohrung auf, daß sie eine Anschlagschulter für einen Anschlagring bildet und dieser so durch Anziehen der Spannmutter gegen die vordere Stirnfläche der Kupplungshülse und die eine, von der Keilverzahnung der Kernwelle gebildete Wange einer den Anschlagring teilweise aufnehmenden Umfangsnut der Kernwelle angezogen werden kann. Infolgedessen lässt sich mit der Spannmutter dieser bekannten Bearbeitungswelle zwar die Kernwelle mit ihrer hinteren Stirnfläche gegen die vordere Stirnfläche der in die Kupplungshülse eingreifenden Antriebswelle festziehen, nicht aber die Dichtflächenpressung zwischen den Schneckenbüchsen erhöhen, da sich die Distanzhülse rückseitig gegen den Anschlagring abstützt und dieser von der Spannmutter zusammen mit der Kernwelle relativ zur Kupplungshülse nach hinten gezogen wird.

Diese bekannte Bearbeitungswelle weist aber noch weitere Nachteile auf: Zum einen besteht die Gefahr, daß beim Anziehen der Spannmutter der Anchlagring die Keilverzahnung der Kernwelle zerdrückt; zum anderen ist es äusserst schwierig, die Bearbeitungswelle ohne ihre Distanzhülse auszubauen, denn hierzu müsste nach dem Lösen der Spannmutter von der Kupplungshülse auch der geteilte Anschlagring aus der Kernwellennut ausgehoben werden, da bei dem üblichen Ausbau der Kernwelle nach vorn dieser Anschlagring sonst die Distanzhülse mit nach vorn zieht; dichtet die Distanzhülse aber wie üblich gegen eine sie umgebende Stopfbüchse ab, so hat ein Herausziehen der Distanzhülse ein Aufquellen der Stopfbüchse in radialer Richtung nach innen zur Folge, so daß die Stopfbüchse neu gestopft werden, muß.

Es leuchtet aber ohne weiteres ein, daß ein Ausheben des geteilten Anschlagrings aus der Umfangsnut der Kernwelle bei heisser Maschine ausserordentlich schwierig wenn nicht gar unmöglich ist.

Der Erfindung lag nun die Aufgabe zugrunde, die bekannte Bearbeitungswelle der eingangs erwähnten Art so zu verbessern, daß die axiale Dichtflächenpressung zwischen den Stirnflächen der auf die Kernwelle aufgeschobenen Bearbeitungselemente auch bei in eine Machine eingebauter Bearbeitungswelle nachgezogen werden kann, so daß sich die Bearbeitungswelle im kalten Zustand in die heisse Maschine einbauen lässt und diejenigen Bauteile, zwischen denen die Bearbeitungselemente eingespannt sind, nach dem Aufwärmen der Bearbeitungswelle auf Betriebstemperatur verhältnismässig einfach nachgestellt werden können, um die erwähnte Dichtflächenpressung zu erhöhen.

Diese Aufgabe lässt sich erfindungsgemäss dadurch lösen, daß das Übertragungselement, mit dem die axiale Spannkraft auf die Kernwelle aufgebracht wird, als quer zur Kernwellenachse verlaufender Bolzen ausgebildet und in einen eine Anschlagfläche bildenden und ebenfalls quer zur Kernwellenachse verlaufenden Kanal der Kernwelle eingeschoben ist und daß sich die Kupplungshülse nach vorn über die Distanzhülse und die Bearbeitungselemente auf dem Sicherungselement abstützt.

Durch die Ausbildung des die axiale Spannkraft auf die Kernwelle übertragenden Elements als quer zur Kernwellenachse verlaufender Bolzen wir erreicht, daß sich die Verbindung zwischen Kupplungshülse und Kernwelle nach Lockern der Spannmutter ganz einfach lösen lässt, und da das um vorderen Ende der Kernwelle angebrachte axiale Sicherungselement ein Widerlager für die beim Anziehen der Spannmutter auf die Kupplungshülse aufgebrachten Reaktionskräfte bildet, werden die axialen Einspannkräft, die auf die zwischen Sicherungselement und Kupplungshülse angeordneten und auf die Kernwelle aufgeschobenen Bauteile wirken, beim Anziehen der Spannmutter erhöht. Die Spannmutter kann aber ohne weiteres so ausgebildet werden daß sie sich durch eine Öffnung im Maschinengehäuse mittels eines Schlüssels oder einers anderen geeigneten Werkzeugs nachziehen lässt.

Der Kanal in der Kernwelle könnte als seitliche Quernut ausgebildet sein, bevorzugt wird jedoch eine Ausführungsform bei der der Kanal von einer Querbohrung der Kernwelle gebildet wird.

Um zu verhindern, daß sich die Spannmutter im Betrieb der Maschine lockert, stützt sie sich bei einer bevorzugten Ausführungsform über einen auf der Kupplungshülse längsverschiebbar, jedoch drehgesichert angeordneten Druckring auf dem Bolzen ab.

Damit der Bolzen keinesfalls aus dem ihn aufnehmenden Kernwellen-Kanal unbeabsichtigt herausfallen kann, wird ferner empfohlen, ihn zu seiner Sicherung an seinem Umfang mit mindestens einer Aussparung zu versehen, in die die Spannmutter bzw. der Druckring eingreift.

Wie bereits erwähnt, wird zum Ausbau der Bearbeitungswelle aus dem Maschinengehäuse nach vorn zunächst die Spannmutter gelockert, bis sie bzw. der Druckring den Bolzen freigibt, worauf der letzter entfernt und so die Kernwelle von der Kupplungshülse gelöst wird. Wenn man nun die Kernwelle nach vorn aus dem Maschinengehäuse herauszieht, so ist nicht gewährleistet, daß die auf die Kernwelle aufgeschobenen Bauteile zusammen mit der Kernwelle herausgezogen werden. Sollen Bearbeitungselement und Distanzhülse zusammen mit der Kernwelle ausgebaut werden, wird bei einer bevorzugten Ausführungsform der erfindungsgemässen Konstruktion ein federnd aufweitbarer Anschlagring vorgesehen, der in eine Umfangsnut der Kernwelle eingreift, über diese jedoch in radialer Richtung übersteht und hinter dem hinteren Ende der Distanzhülse liegt; er bildet somit einen axialen Anschlag für die Distanzhülse; um zu verhindern, daß dieser Anschlagring die Keilverzahnung der Kernwelle in derselben Weise nachteilig beeinträchtigt wie dies vorstehend für die bekannte Bearbeitungswelle geschildert wurde, werden die Distanzhülse und die Umfangsnut der Kernwelle so ausgebildet und relativ zueinander angeordnet, daß der Anschlagring bei angezogener Spannmutter in axialer Richtung kräftefrei ist. Federnd aufweitbar muß der Anschlagring sein, um ihn überhaupt in die Umfangsnut der Kernwelle bringen zu können.

Dichtet die Distanzhülse gegen eine sie umgebende Stopfbüchse ab und soll die Distanzhülse beim Ausbau der Kernwelle und der Bearbeitungselemente in der Maschine verbleiben, so empfiehlt sich eine Konstruktion, bei der die Kernwelle im Bereich des vorderen Endes der Distanzhülse eine Umfangsnut aufweist, in der ein über die letztere überstehender, federnd aufweitbarer Anschlagring angeordnet ist, welcher einen axialen Anschlag für das hinterste Bearbeitungselement bildet, wobei das letztere und die Umfangsnut so ausgebildet und relativ zueinander angeordnet, sind, daß der Anschlagring bei angezogener Spannmutter in axialer Richtung kräftefrei ist. Beim Ausbau der Kernwelle werden dann zwar sämtliche Bearbeitungselemente nach vorn aus dem Maschinengehäuse herausgezogen, nicht aber die Distanzhülse, so daß diese innerhalb der sie umgebenden Dichtung verbleibt.

Weitere Merkmale, Vorteile und Einzelheiten der Erfindung ergeben sich aus den beigefügten Ansprüchen und/oder aus der nachfolgenden Beschreibug und der beigefügten zeichnerischen Darstellung eines Schneckenwellenextruders, dessen Schneckenwellen eine besonders vorteil-hafte Ausführungsform der erfindungsgemässen Bearbeitungswelle darstellen; in der Zeichnung zeigen:

Figur 1 einen Längsschnitt durch die wesentlichen Teile einer Kunststoff-Extrusionsmaschine mit erfindungsmässen Schneckenwellen;

Figur 2 den in Figur 1 mit "A" bezeichneten Ausschnitt in grösserer Darstellung, und

Figur 3 einen Schnitt nach der Linie 3—3 in Figur 2.

Ein Maschinengehäuse 10 besitzt zwei parallel zueinander verlaufende, abgestufte Gehäusebohrungen 12, in denen jeweils einen Schneckenwelle 14 angeordnet ist. In die Gehäusebohrungen 12 münden mehrere Gehäuseöffnungen, von denen nur eine bei 16 dargestellt wurde und die z.B. der Beschickung der Maschine mit dem zu bearbeitenden Kunststoff, der Zugabe von beizumischenden Bestandteilen oder der Entgasung des behandelten Materials dienen. Schliesslich besitzt das Maschinengehäuse 10 zwei Auslassöffnungen 18, über die der von dem Schneckenwellen 14 bearbeitete Kunststoff unter hohem Druck aus dem Maschinengehäuse heraus und durch ein nachgeschaltetes, nicht dargestelltes Extrusionswerkzeug hindurchgedrückt wird.

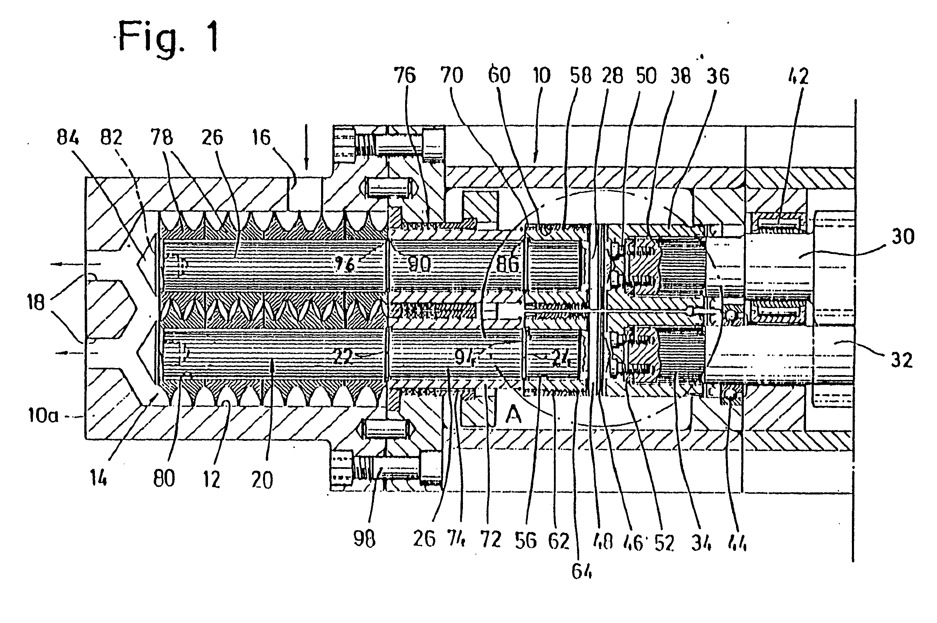

Jede der Schneckenwellen 14 hat eine Trag- oder Kernwelle 20 mit einer nur durch eine vordere und eine hintere Umfangsnut 22 bzw. 24 unterbrochenen, ansonsten aber durchgehenden Keilverzahnung 26, die im Bereich ihres hinteren Endes mit einer Querbohrung 28 versehen ist. Für den Antrieb der beiden Schneckenwellen sind Antriebswellen 30 und 32 vorgesehen, die im Bereich ihrer vorderen Enden jeweils eine Keilverzahnung 34 tragen und in Kupplungshülsen 36 hineinragen, welche eine entsprechende Keilverzahnung 38 aufweisen, um so das Antriebsdrehmoment von den Antriebswellen 30 und 32 auf die Kernwellen 20 übertragen zu können. Zwar zeigt die Figur 1 zwei Radiallager 42 und 44 für die Antriebswellen 30 und 32, nicht jedoch die weiteren Lager für diese Wellen; da über die Antriebswellen ganz erhebliche Drehmomente übertragen werden und da sie ausserdem infolge des hohen, vor den Schneckenwellen 14 herrschenden Drucks sehr hohe axiale Drücke aufnehme müssen, sind für die Antriebswellen 30 und 32 verhältnismässig gross dimensionierte Radial- und Axiallager erforderlich, deren Anordnung und Ausbildung den Unterlagen der Patentanmeldung DE—A—32 01 952 entnommer werden kann, so daß es sich erübrigt, diese Lager hier darzustellen und zu beschreiben.

Auch die Kupplungshülsen 36 haben eine Querbohrung 46, deren Durchmesser jedoch grösser ist als derjenige der Querbohrungen 28 der Kernwellen 20, so daß in die letzteren passend eingeschobene Spannbolzen 48 von den Querbohrungen 46 der Kupplungshülsen mit Spiel aufgenommen werden. Der axialen Befestigung der Kupplungshülsen 36 an den Antriebswellen 30, 32 dienen Schrauben 50, und zwischen der Kupplungshülsen und den vorderern Stirnflächen der Antriebsweller 30, 32 sind Toleranzausgleichsringe 52 angeordnet, so daß sich durch die Wahl der Dicke dieser Toleranzausgleichsringe

die Schneckenwellen 14 in axialer Richtung stets exakt positionieren lassen, auch wenn die Lagerung für die Antriebswellen 30 und 32 oder diese selbst in axialer Richtung Toleranzen aufweisen.

Das von den Antriebswellen 30, 32 über die Keilverzahnungen 34, 38 in die Kupplungshülsen 36 eingeleitete Drehmoment wird über eine weitere innere Keilverzahnung 56 oder Kupplungshülser und die Keilverzahnung 26 der Kernwellen 20 auf die letzteren übertragen. Die Kupplungshülsen 36 besitzen ein Aussengewinde 58, auf das eine mit einem Innengewinde 60 versehene Spannmutter 62 aufgeschraubt ist. Zwischen dieser und dem jeweiligen Spannbolzen 48 liegt ein auf die Kupplungshülse aufgeschrobener Druckring 64, der dadurch gegen ein Verdrehen relativ zur Kupplungshülse 36 gesichert ist, daß er mit einem Keil 66 in eine Längsnut 68 der Kupplungshülse eingreift, die im Bereich des Aussengewindes 58 in die Kupplungshülse eingearbeitet worden ist. An ihrem vorderen Ende ist die Spannmutter 62 mit einem Satz von Aussparungen 70 versehen, an denen sich ein geeigneter Schlüssel ansetzen lässt, mit welchem durch eine nicht gezeigt Öffnung im Maschinengehäuse 10 hindurch die Spannmutter 62 gedreht und angezogen werden kann. Da der Spannbolzen 48 in der Querbohrung 28 der betreffenden Kernwelle 20 spielfrei sitzt, das Übermass der Querbohrung 46 in der Kupplungshülse eine Längsverschiebung des Spannbolzens relativ zur Kupplungshülse jedoch zulässt, kann durch Drehen der Spannmutter 62 die betreffende Kernwelle 20 relativ zur Kupplungshülse 36 gemäss Figur 1 nach rechts gezogen werden, jedenfalls soweit, bis der Spannbolzen 48 an der Wand der Querbohrung 46 anschlägt, was jedoch durch eine entsprechende Wahl des Bohrungsdurchmessers verhindert werden kann—die Querbohrung 46 ist überhaupt nur erforderlich, um den Spannbolzen 48 in die Querbohrung der Kernwelle 20 einführen zu können.

An die Kupplungshülse 36 grenzt eine auf die jeweilige Kernwelle 20 aufgeschobene Distanzhülse 72 an, die eine in die Keilverzahnung 26 der Kernwelle 20 eingreifende Keilverzahnung haben kann, jedoch nicht aufweisen muß; die Aussenumfangsfläche der Distanzhülse 72 bildet eine Dichtfläche 74, die mit einer als Ganzes mit 76 bezeichneten, in das Maschinengehäuse 10 eingesetzten und die Distanzhülse 72 umgebenden Stopfbüchse zusammenwirkt. Vor der Distanzhülse liegen mehrere sog. Schneckenbüchsen 78, die auf die betreffende Kernwelle 20 aufgeschoben sind und innen eine Keilverzahnung 80 besitzen, die in die Keilverzahnung 26 der betreffenden Kernwelle 20 eingreift, so daß die Schneckenwellen von der Kernwelle angetrieben werden. Das Aussenprofil der Schneckenbüchsen ist so gestaltet, daß sie für jede der Schneckenwellen 14 ein durchgehendes Schneckenwellenprofil ergeben und die beiden Schneckenwellen in einandergreifen, wie dies die Figur 1 erkennen lässt.

Erfindungsgemäss steht nun die jeweils vorderste Schneckenbüchse 78 über die betreffende Kernwelle 20 vor, um mit einem in eine Gewindebohrung 82 der Kernwelle einschraubbaren Kopfstück 84 ein Widerlager für die auf die Kernwelle aufgeschobenen Bauteile bilden zu können.

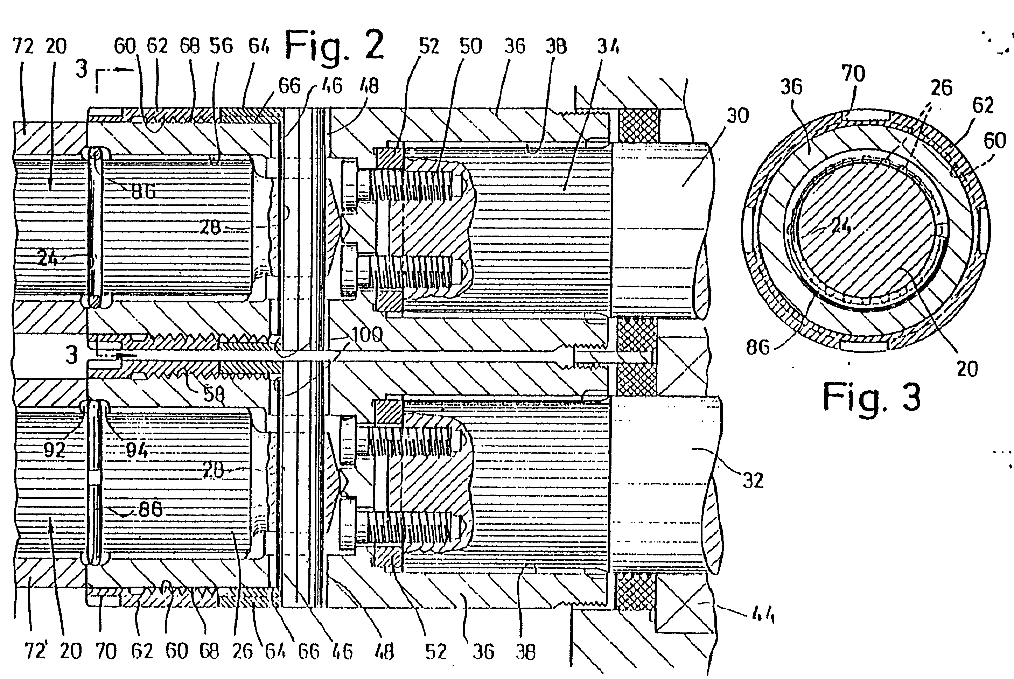

Erfindungsgemäss bilden nun geteilte und somit federnd aufweitbare, in die Nuten 22 und 24 einstzbare Anschlagringe 96 und 86 sowohl Montagehilfen als auch Mittel zum Ausbauen gewisser, auf die Kernwellen aufgeschobener Bauteile beim Herausziehen der Kernwellen 20 nach vorn, d.h. gemäss Figur 1 nach links, aus dem Maschinengehäuse. 10. Der vordere Anschlagring 96 ragt in radialer Richtung soweit aus der vorderen Nut 22 heraus, daß er einen hinteren Anschlag für die hinterste der Schneckenbüchsen 78 bildet, und entsprechendes gilt für den hinteren Anschlagring 86 bezüglich der Distanzhülse 72. Andererseits besitzen die Distanzhülse 72 und die Kupplungshülse 36 in axialer Richtung so gross bemessene und derart angeordnete Ausnehmungen 90, 92 und 94 zur Aufnahme der Anschlagringe 96 und 86, daß diese Anschlagringe bei fertigmontierten und in das Maschinengehäuse 10 eingebauten Schneckenwellen 14 in axialer Richtung kräftefrei sind (s. das in Figur 2 dargestellte axiale Spiel der hinteren Anschlagringe 86 in den Distanzhülsen 72 und den Kupplungshülsen 36).

Der Ausbau der Schneckenwellen 14 aus dem Maschinengehäuse 10 nach vorn ist deshalb möglich, weil das Maschinengehäuse geteilt und mittels lösbarer Schrauben 98 zusammengehalten ist, so daß der gemäss Figur 1 linke Gehäuseteil 10a abgenommen werden kann.

Schliesslich werden die Spannbolzen 48 mit Hilfe der Druckringe 64 in den Schneckenwellen 14 dadurch gesichert, daß die Spannbolzen an ihren Enden Aussparungen 100 aufweisen, in die die Druckringe 64 eingreifen.

Zur Montage der verschiedenen Bauteile einer Schneckenwelle 14 auf der betreffenden Kernwelle 20 wird nun wie folgt vorgegangen: Zunächst wird der hintere Anschlagring 86 montiert, dann die Distanzhülse 72 von vorn auf die Kernwelle aufgeschoben, anschliessend der vordere Anschlagring 98 angebracht, und schliesslich werden die Schneckenbüchsen 78 aufgeschoben und mit Hilfe des Kopfstücks 84 gesichert. Die Anschlagringe 96 und 86 bestimmen grob die axiale Position der Distanzhülse 72 und der Schneckenbüchen 78 auf der Kernwelle 20. Dann wird die Schneckenwelle mit dem hinteren Ende de Kernwelle 20 in die zugehörige Kupplunghülse 36 eingeschoben, wobei die Spannmutter 62 nur soweit auf die Kupplungshülse aufgeschraubt worden ist, daß der Druckring 64 die Querbohrung 46 in der Kupplungshülse noch nicht überlappt, so daß sich anschliessend der Spannbolzen 48 in die Querbohrungen 28 und 46 einschieben lässt (hierzu kann durch die nicht dargestellte Öffnung im Maschinengehäuse 10 hindurch gearbeitet werden, die es dann auch zulässt, mit Hilfe eines geeigneten Schlüssels die Spannmutter 62 zu drehen). Anschliessend wird die Spannmutter 62 angezogen, so daß mit dem Spannbolzen 48 auch die Kernwelle 20 gemäss Figur 1 nach rechts gezogen wird; infolge der von der Spannmutter auf die Kupplungshülse 36 übertragenen Reaktionskräfte werden demnach die Distanzhülse 72 und die Schneckenbüchsen 78 zwischen der Kupplungshülse 36 und dem Kopfstück 84 in axialer Richtung eingespannt. Wie bereits erwähnt, werden, dabei durch die Anschlagringe 96 und 86 axiale Kräfte nicht übertragen. Auch ist nun verständlich, daß die Dichtflächenpressung zwischen den Stirnflächen der Schneckenbüchsen 78 und der Distanzhülse 72, des Kopfstücks 84 und der Kupplungshülse 36 auch bei warmer Maschine einfach erhöht bzw. wieder hergestellt werden kann, indem man die Spannmutter 62 nachzieht. Beim Anziehen der Spannmutter 62 wird ausserdem der Spannbolzen 48 durch den Druckring 64 automatisch gegen ein Herausfallen aus der Kupplungshülse gesichert.

Die Demontage erfolgt in umgekehrter Reihenfolge, wobei ein Herausziehen der Distanzhülse 72 aus der Stopfbüchse 76 beim Herausziehen der Kernwelle 20 aus dem Maschinengehäuse dadurch vermieden werden kann, daß man bei der Montage der Schneckenwelle den hinteren Anschlagring 86 weglässt.

**Patentansprüche**

1. Bearbeitungswelle (14) für Maschinen zum Extrudieren, Kneten, Dispergieren, Mischen oder Homogenisieren zähviskoser, plastischer, körniger oder pulverförmiger Materialien, mit mindestens einer wenigstens eine Längsnut (26) aufweisenden Kernwelle (20) auf die ringscheiben- oder büchsenförmige Bearbeitungselemente (78) aufgeschoben sind, welche zur Drehsicherung auf der Kernwelle (20) mit einem Vorsprung (80) in die Kernwellen-Längsnut (26) eingreifen, sowie mit einem am vorderen Ende der Kernwelle (20) befestigten axialen Sicherungselement (84) für die Bearbeitungselemente, (78), mindestens einer die Bearbeitungselemente (78) in axialer Richtung nach hinten Abstützenden, auf die Kernwelle (20) aufgeschobenen Distanzhülse (72), die an ihrem Aussenumfang eine Dichtfläche (74) aufweist, einer auf den hinteren Endbereich der Kernwelle (20) aufgeschobenen Kupplungshülse (36), welche zur Drehmomentübertragung mit einem Vorsprung (56) in die Kernwellen-Längsnut (26) eingreift und ein Aussengewinde (58) aufweist, auf das eine die Kupplungshülse (36) übergreifende Spannmutter (62) mit einem Innengewinde (60) aufgeschraubt ist, und mit einem Spannkraft-Übertragungselement, welches durch die Spannmutter (62) nach hinten gegen einen Anschlag der Kernwelle (20) anziehbar ist, dadurch gekennzeichnet, daß das Übertragungselement als quer zur Kernwellenachse verlaufender Bolzen (48) ausgebildet und in einen den Anschlag bildenden und ebenfalls quer zur Kernwellenachse verlaufenden Kanal (28) der Kernwelle (20) eingeschoben ist und daß sich die Kupplungshülse (36) nach vorn über die Distanzhülse (72) und die Bearbeitungselemente (78) auf dem Sicherungselement (84) abstützt.

2. Bearbeitungswelle nach Anspruch 1, dadurch gekennzeichnet, daß der Kanal als Querbohrung (28) der Kernwelle (20) ausgebildet ist.

3. Bearbeitungswelle nach Anspruch 1 oder 2, dadurch gekennzeichnet, daß sich die Spannmutter (62) über einen auf der Kupplungshülse (36) längsverschiebbar, jedoch drehgesichert angeordneten Druckring (64) auf dem Bolzen (48) abstützt.

4. Bearbeitungswelle nach Anspruch 1 oder 3, dadurch gekennzeichnet, daß zur Sicherung des Bolzens (48) dieser an seinem Umfang mindestens eine Aussparung (100) aufweist, in die die Spannmutter (62) bzw. der Druckring (64) eingreift.

5. Bearbeitungswelle nach einem oder mehreren der vorstehenden Ansprüche, dadurch gekennzeichnet, daß die Kernwelle (20) im Bereich des hinteren Endes der Distanzhülse (72) eine Umfangsnut (24) aufweist, in der ein über die letztere überstehender, federnd aufweitbarer Anschlagring (86) angeordnet ist, welcher einen axialen Anschlag für die Distanzhülse (72) bildet, wobei die letztere und die Umfangsnut (24) so ausgebildet und relativ zueinander angeordnet sind, daß der Anschlagring (86) bei angezogener Spannmutter (62) in axialer Richtung kräftefrei ist.

6. Bearbeitungswelle nach einem oder mehreren der vorstehenden Ansprüche, dadurch gekennzeichnet, daß die Kernwelle (20) im Bereich des vorderen Endes der Distanzhülse (72) eine Umfangsnut (22) aufweist, in der ein über die letztere überstehender, federnd aufweitbarer Anschlagring (96) angeordnet ist, welcher einen axialen Anschlag für das hinterste Bearbeitungselement (78) bildet, wobei das letztere und die Umfangsnut (22) so ausgebildet und relativ zueinander angeordnet sind, daß der Anschlagring 96 bei angezogener Spannmutter (62) in axialer Richtung kräftefrei ist.

7. Bearbeitungswelle nach Anspruch 5 oder 6, dadurch gekennzeichnet, daß der Anschlagring (96, 86) in Umfangsrichtung geteilt ist.

**Revendications**

1. Arbre de travail (14) pour des machines d'extrusion, pétrissage, dispersion, mélange ou homogénéisation de matières visqueuses, plastiques, granuleuses ou pulvérulentes, avec au moins un arbre de noyau (20) présentant au moins une rainure longitudinale (26), sur lequel sont enfilés des éléments de travail (78) en forme de disques ou manchons, qui s'engagent pour la fixation en rotation sur l'arbre de noyau (20), avec une saillie (80) dans la rainure longitudinale (26) de l'arbre de noyau, ainsi qu'avec un élément de sécurité axial (84) fixé à l'extrémité avant de l'arbre de noyau (20) pour les éléments de travail (78), au moins une douille d'écartement (72) soutenant vers l'arrière dans le sens axial les éléments de travail (78), enfilée sur l'arbre de noyau (20), qui présente sur sa périphérie externe une surface d'étanchéité (74), une douille de couplage (36) enfilée sur la zone d'extrémité arrière de l'arbre de noyau (20), qui s'engage par une saillie (56) pour la transmission de couple, dans la rainure longitudinale (26) de l'arbre de noyau et présente un pas de vis externe (58), sur lequel un écrou de serrage (62) recouvrant la douille de couplage (36) est vissé avec un pas de vis interne (60), et avec un élément de transmission de force de serrage, qui peut être serré vers l'arrière par l'écrou de serrage (62), contre un butée de l'arbre de noyau (20), caractérisé en ce que l'élément de transmission est réalisé en tant que goujon (48) s'étendant transversalement à l'axe de l'arbre de noyau, et est glissé dans un canal (28) de l'arbre de noyau (20), formant la butée et s'étendant également transversalement à l'axe de l'arbre de noyau, et en ce que la douille de couplage (36) s'appuie vers l'avant, par l'intermédiaire de la douille d'écartement (72) et des éléments de travail (78), sur l'élément de sécurité (84).

2. Arbre de travail suivant la revendication 1, caractérisé en ce que le canal est réalisé en tant qu'alésage transversal (28) de l'arbre de noyau (20).

3. Arbre de travail suivant la revendication 1 ou 2, caractérisé en ce que l'écrou de serrage (62) s'appuie par l'intermédiaire d'une bague de pression (64), agencée à coulissement longitudinal sur la douille de couplage (36) mais cependant sans rotation relative, sur le goujon (48).

4. Arbre de travail suivant la revendication 1 ou 3, caractérisé en ce que pour assurer le goujon (48), celui-ci présente sur sa périphérie au moins un évidement (100), dans lequel l'écrou de serrage (62) ou la bague de pression (64) s'engage.

5. Arbre de travail suivant une ou plusieurs des revendications précédentes, caractérisé en ce que l'arbre de noyau (20) présente, au voisinage de l'extrémité arrière de la douille d'écartement (72), une gorge périphérique (24) dans laquelle est agencée une bague de butée (86) pouvant être élargie élastiquement, faisant saillie au-delà de celle-ci, qui forme une butée axiale pour la douille d'écartement (72), cette dernière et la gorge périphérique (24) étant réalisées et agencées mutuellement de telle sorte que la bague de butée (86) est exempte de forces dans le sens axial avec l'écrou de serrage (62) serré.

6. Arbre de travail suivant une ou plusieurs des revendications précédentes, caractérisé en ce que l'arbre de noyau (20) présente au voisinage de l'extrémité avant de la douille d'écartement (72), une gorge périphérique (22), dans laquelle est agencée une bague de butée (96) pouvant être élargie élastiquement, faisant saillie au-delà de celle-ci, qui forme une butée axiale pour l'élément de travail (78) le plus en arrière, ce dernier et la gorge périphérique (22) étant réalisés et agencés mutuellement de telle sorte que la bague de butée (96) est exempte de forces dans le sens axial avec l'écrou de serrage (62) serré.

7. Arbre de travail suivant la revendication 5 ou 6, caractérisé en ce que la bague de butée (96, 86) est divisée dans le sens périphérique.

## Claims

1. A working shaft (14) for machines for extruding, kneading, dispersing, mixing or homogenizing high-viscous, plastic, granular or powdery materials, comprising at least one core shaft (20) having at least one longitudinal groove (26) and annular disc-shaped or bushing-type working members (78) slipped onto said shaft, said working members having a projection (80) for engagement in the core shaft longitudinal groove (26) to prevent their rotation on the core shaft (20), also comprising an axial securing member (84) for the working members (78), said securing member being attached to the front end of the core shaft (20), at least one spacer sleeve (72) slipped onto the core shaft (20) to support the working members (78) rearwardly in axial direction, said spacer sleeve having a sealing surface (74) on its outer circumference, a coupling sleeve (36) slipped onto the rear end region of the core shaft (20) and having a projection (56) for engagement in the core shaft longitudinal groove (26) for torque transmission and an external thread (58), a clamp nut (62) with an internal thread (60) being screwed onto said external thread and overlapping the coupling sleeve (36), and also comprising a clamping force transmitting member adapted to be tightened rearwardly against a stop member of the core shaft (20) by the clamp nut (62), characterized in that the transmitting member is designed as a bolt (48) extending transversely to the axis of the core shaft and is inserted into a channel (28) of the core shaft (20), said channel likewise extending transversely to the axis of the core shaft and forming the stop member, and that the coupling sleeve (36) is supported on the securing member (84) in a forward direction via the spacer sleeve (72) and the working members (78).

2. Working shaft as defined in claim 1, characterized in that the channel is designed as a transverse bore (28) of the core shaft (28).

3. Working shaft as defined in claims 1 or 2, characterized in that the clamp nut (62) is supported on the bolt (48) via a thrust ring (64) arranged on the coupling sleeve (36) so as to be longitudinally displaceable but non-rotatable.

4. Working shaft as defined in claims 1 or 3, characterized in that to secure the bolt (48), the latter has at least one recess (100) on its circumference for engagement by the clamp nut (62) or the thrust ring (64).

5. Working shaft as defined in any or several of the preceding claims, characterized in that the core shaft (20) has a circumferential groove (24) in the region of the rear end of the spacer sleeve (72), a resiliently expandable stop ring (86) being arranged in and projecting beyond said groove, said stop ring forming an axial stop for the spacer sleeve (72), the latter and the circumferential groove (24) being designed and arranged relative to one another such that the stop ring (86) is free of forces in an axial direction when the clamp nut (62) is tightened.

6. Working shaft as defined in any or several of the preceding claims, characterized in that the core shaft (20) has a circumferential groove (22) in the region of the front end of the spacer sleeve (72), a resiliently expandable stop ring (96) being arranged in and projecting beyond said groove, said stop ring forming an axial stop for the rearmost working member (78), the latter and the circumferential groove (22) being designed and arranged relative to one another such that the stop ring (96) is free of forces in an axial direction when the clamp nut (62) is tightened.

7. Working shaft as defined in claims 5 or 6, characterized in that the stop ring (96, 86) is divided in a circumferential direction.

Fig. 1

Fig. 2

Fig. 3

0 132 525